# EUROPÄISCHE PATENTANMELDUNG

(11) **EP 1 876 488 A1**
(43) Veröffentlichungstag der Anmeldung: **09.01.2008**
(21) Anmeldenummer: 07011081.2
(22) Anmeldetag: 06.06.2007
(51) Int. Cl.: G02C 5/06, G02C 5/16, G02C 3/00

(54) **Hilfsbrille**

(30) Priorität: 07.07.2006 DE 102006031464
(71) Anmelder: ESCHENBACH OPTIK GmbH + Co., 90409 Nürnberg (DE)
(72) Erfinder: Henkelmann, Klaus, 90552 Röthenbach (DE); Kohl, Peter, 90522 Oberasbach (DE); Schillinger, Martin, 81671 München (DE)
(74) Vertreter: Mörtel & Höfner

(57) **Zusammenfassung**

Eine Hilfsbrille für die Bedienung eines portablen elektronischen Gerätes (24) enthält einen Rahmen (2), der durch eine schmale, dünne Platte gebildet ist, in den zwei Linsen (4) eingebettet sind, und an deren seitlichen Rand jeweils ein schwenkbarer Bügel (12) angeordnet ist, dessen Freiende (13) im Wesentlichen geradlinig ausläuft, wobei die Bügel (12) bei auf die Nase eines Trägers aufgesetztem Rahmen (2) unter Ausübung einer nach innen gerichteten Klemmkraft an den Schläfen des Trägers anliegen. Zum Erzeugen oder Unterstützen dieser Klemmkraft weist der Rahmen (2) einen flexiblen Mittelsteg (8) und eine derart geringe Rahmenbreite (B) auf, dass beim Aufsetzen der Hilfsbrille durch die an den Schläfen des Brillenträgers anliegenden Bügel (12) eine elastische Durchbiegung des Rahmens (2) erfolgt, durch die die Klemmkraft zwischen den Bügeln (12) und den Schläfen zumindest unterstützt wird. Auf diese Weise kann eine miniaturisierte Bauform erzielt werden.

## Beschreibung

Die Erfindung bezieht sich auf eine Hilfsbrille.

Im Alltag besteht für sehschwache Menschen häufig das Problem, einen Gegenstand zu betrachten oder zu bedienen, auf dem kleingedruckte Symbole zu entziffern sind. Insbesondere die Bedienung eines über ein LCD-Display und Bedienelemente menügeführten portablen elektronischen Gerätes, wie beispielsweise ein Mobiltelefon, eine Digitalkamera oder ein Navigationsgerät, die oftmals beidhändig durchgeführt werden muss, bereitet alterssichtigen Menschen erhebliche Schwierigkeiten, da deren Displays und Bedienelemente relativ klein sind und daher für den alterssichtigen Menschen ohne ein optisches Hilfsmittel nicht benutzt werden können. Obwohl alterssichtige Menschen in der Regel über ein solches optisches Hilfsmittel verfügen, ist dieses jedoch häufig nicht zur Hand, wenn es benötigt wird, da die üblichen Lesebrillen praktisch die gleichen Ausmaße besitzen wie eine herkömmliche Brille und deshalb nicht stets bei sich getragen werden.

Um zumindest die Erkennbarkeit der auf einem kleinen Display eines Mobiltelefones wiedergegebenen Symbole, Buchstaben oder Ziffern zu verbessern, ist deshalb im Stand der Technik beispielsweise in der DE 201 06 210 U1, der DE 201 00 194 U1, der US 6,307,686 B1 und der US 6,275,333 B1 vorgeschlagen worden, vor das Display eine Vergrößerungseinrichtung in Form einer Lupe anzuordnen. Durch diese Maßnahme wird zwar das Erkennen der auf dem Display wiedergegebenen Information für den alterssichtigen Menschen erleichtert, jedoch ist nach wie vor die Bedienung erschwert, da in vielen Fällen auch die Bedienelemente und deren Beschriftung sehr klein sind.

Alternativ hierzu ist es auch bekannt, Hilfsbrillen zu verwenden, die aufgrund ihrer kleinen Bauform stets mit sich getragen werden können. So ist beispielsweise in der DE 91 05 449 U1 eine binokulare Brille offenbart, deren Linsen durch ein Scharniergelenk miteinander verbunden sind, so dass der Rahmen zusammengeklappt werden kann. Um im zusammengeklappten Zustand eine kurze Bauform zu ermöglichen, sind auch die Bügel verkürzt, so dass deren Länge die halbe Rahmenbreite, d.h. die Breite des zusammengeklappten Rahmens nicht überschreitet.

In der EP 1 008 888 A1 ist eine Brille offenbart, bei der Rahmen und Linsen einstückig aus einem Spritzgussteil geformt sind. Bei dieser bekannten Ausführungsform dienen die Bügel im eingeschwenkten Zustand zugleich als Schutzbehälter.

Aus der FR 2 608 288 ist es bekannt, die Aufbauhöhe einer Brille im zusammengeklappten Zustand dadurch zu verringern, dass zumindest einer der Bügel eine Aussparung aufweist, in der der andere Bügel beim Einklappen anliegt.

Der Erfindung liegt nun die Aufgabe zu Grunde, eine Hilfsbrille anzugeben, die auf Grund ihrer kleinen Bauform problemlos mitgeführt werden kann.

Die genannte Aufgabe wird gemäß der Erfindung gelöst mit einer Hilfsbrille mit den Merkmalen des Patentanspruches 1. Eine solche Hilfsbrille umfasst einen Rahmen, der durch eine schmale, dünne Platte gebildet ist, in die zwei Linsen eingebettet sind, und an deren seitlichen Rand jeweils ein schwenkbarer Bügel angeordnet ist, dessen Freiende im wesentlichen geradlinig ausläuft, wobei die Bügel bei auf die Nase eines Trägers aufgesetztem Rahmen unter Ausübung einer nach innen gerichteten Klemmkraft an den Schläfen des Brillenträges anliegen. Der Rahmen umfasst einen flexiblen Mittelsteg und weit eine derart geringe Rahmenbreite auf, dass beim Aufsetzen des optischen Hilfsmittels durch die an den Schläfen des Trägers anliegenden Bügel eine elastische Durchbiegung des Rahmens erfolgt, durch die eine Klemmwirkung zwischen den Bügeln und Schläfen zumindest unterstützt wird.

Durch die Verwendung eines aus einer schmalen, dünnen Platte gebildeten Rahmens sowie die Verwendung von Bügeln mit im Wesentlichen geradlinigen Freienden, die im eingeschränkten oder eingeklappten Zustand, d.h. wenn sie am Rahmen anliegen durch ihre geradlinige Form, d.h. durch das Fehlen von Ohrbügeln, nicht über den Rahmen vorstehen, ist es möglich, eine vollwertige binokulare Hilfsbrille zu schaffen, die eine derart schmale und dünne Bauform aufweist, dass sie problemlos in oder an Alltagsgegenständen, zu deren Gebrauch sie entweder benötigt wird, beispielsweise ein Mobiltelefon, oder die in der Regel stets zur Hand sind, beispielsweise eine Geldbörse, mitgeführt werden kann, da auch der Behälter zum Aufbewahren des optisches Hilfsmittels entsprechend flach und rechteckig sein kann. Die schmale und flache Bauform des optisches Hilfsmittels und des Aufbewahrungsbehälters ermöglicht es, dass letzterer unmittelbar an Gebrauchsgegenständen, zu deren Bedienen ein solches optisches Hilfsmittel benötigt wird, befestigt werden kann, so dass sich dieses stets am Gebrauchsgegenstand befindet. So kann der Aufbewahrungsbehälter beispielsweise auf der Rückseite eines Mobiltelefons mit Hilfe eines Klebestreifens oder eines Klettbands angeordnet werden, so dass die Hilfsbrille zwangsläufig auch dann verfügbar ist, wenn das Mobiltelefon benutzt wird.

Da der flexible Mittelsteg aufgrund der geringen Rahmenbreite bei aufgesetzter Hilfsbrille eine Klemmwirkung erzeugt, wird ein besonders guter Sitz der Hilfsbrille auch mit starren Bügeln erreicht. Eine solche Durchbiegung hat neben der dadurch hervorgerufenen Klemmwirkung zusätzlich den Vorteil, dass die optischen Achsen der Linsen konvergieren und damit das Lesen im Nahbereich erleichtern.

Die Hilfsbrille gemäß der Erfindung ist für die Verwendung im Nahbereich bestimmt, wobei darunter im Sinne der vorliegenden Erfindung auch ein erweiterter Nah- oder Arbeitsbereich zu verstehen ist, wie er beispielsweise bei einem Computerarbeitsplatz (Entfernung zum Monitor) vorliegt.

Ein guter Sitz der Hilfsbrille ist insbesondere dann möglich, wenn die Schwenkbewegung der Bügel nach außen begrenzt ist.

Wenn die Bügel außerdem feder- oder biegeelastisch sind, wird die durch die Durchbiegung des Rahmens erzeugte Klemmwirkung zusätzlich unterstützt bzw. verstärkt.

Ein sicherer Sitz der Hilfsbrille wird insbesondere dann erzielt, wenn die Bügel an ihren Freienden zumindest an ihrer Innenseite mit einem rutschhemmenden Material versehen sind.

Wenn zumindest einer der Bügel einen Durchbruch aufweist, der derart gestaltet ist, dass die Linsen im eingeklappten Zustand von den Bügeln allenfalls in einem kleinen Teilbereich abgedeckt werden, kann die Hilfsbrille auch als Lupe verwendet werden, ohne dass es hierzu notwendig ist, vorher die Bügel aufzuklappen.

Vorzugsweise weist jeder der Bügel einen Durchbruch auf, durch den im eingeklappten Zustand das Freiende des jeweils anderen Bügels hindurchragt, so dass es auf dem Rahmen aufliegt. Dadurch ist auch bei sich überlappenden Bügeln die Aufbauhöhe weiter verringert.

In einer weiteren vorteilhaften Ausgestaltung der Erfindung ist als rutschhemmendes Material ein erhabenes Auflagekissen vorgesehen. Insbesondere sind bei dieser Ausführungsform im Rahmen Vertiefungen angeordnet, in denen bei eingeschwenkten Bügeln das Auflagekissen einliegt. Dadurch ist sichergestellt, dass trotz der durch das Auflagekissen erzeugten größeren Dicke der Bügel die Aufbauhöhe der eingeklappten Hilfsbrille nicht unnötig vergrößert wird.

Wenn die Bügel derart schwenkbar am Rahmen angeordnet sind, dass sie, wenn sie sich bei waagerecht gehaltenen Rahmen unterhalb des Rahmens befinden, durch die Wirkung der Schwerkraft aufklappen oder auffallen, ist eine Einhandbedienung der Hilfsbrille möglich, so dass der zu betrachtende Gegenstand, beispielsweise ein elektronische Gerät, nicht beiseite gelegt werden muss.

In einer weiteren bevorzugten Ausgestaltung der Erfindung sind die Bügel nach außen gewölbt. Dies ermöglicht die sichere Aufbewahrung in einem an einer Schmalseite offenen Behälter, da die gewölbten Bügel die Hilfsbrille in dem Behälter verklemmen.

In einer weiteren vorteilhaften Ausgestaltung sind Rahmen und Linsen einstückig aus einem Spritzgussteil geformt. Dies ermöglicht die kostengünstige Herstellung einer solchen Hilfsbrille.

Die Aufbauhöhe der Hilfsbrille im eingeklappten Zustand kann zusätzlich verringert werden, wenn die optische Wirkung dadurch herbeigeführt wird, dass die Linsen eine Fläche mit einer diffraktiven Struktur aufweisen.

In einer weiteren vorteilhaften Ausführungsform sind die Linsen als Gleitsichtgläser ausgeführt, um auf diese Weise unterschiedliche Arbeitsbereiche abzudecken.

Wenn die Linsen in den durch eine Platte gebildeten Rahmen ohne Überstand eingebettet sind, sind die optisch wirksamen Flächen beim Ablegen der Hilfsbrille oder bei deren Einschieben in einen Behälter vor einer Beschädigung geschützt.

Eine besonders benutzerfreundliche Gestaltung der Hilfsbrille wird dann erreicht, wenn die Hilfsbrille bezüglich einer durch die optischen Achsen der Linsen festgelegten Ebene symmetrisch gestaltete Ausnehmungen zum Auflegen auf die Nase des Trägers sowie symmetrisch zu dieser Ebene gestaltete Bügel aufweist. In diesem Fall kann die Hilfsbrille in zwei um 180° versetzte Positionen aufgesetzt werden, so dass ein Wenden der Brille nicht notwendig ist. Auf diese Weise ist bei der Verwendung von Bügeln, die unter der Wirkung der Schwerkraft selbsttätig aufklappen die Einhandbedienung erleichtert. Eine solche Gestaltung der Hilfsbrille ist auch dann von Vorteil, wenn der Mittelsteg starr ist, d.h. sich beim Aufsetzen nicht oder allenfalls nur unwesentlich durchbiegt.

Zur weiteren Erläuterung der Erfindung wird auf das Ausführungsbeispiel der Zeichnung verwiesen. Es zeigen:
- Fig. 1: eine Hilfsbrille gemäß der Erfindung in einer schematischen perspektivischen Darstellung,
- Fig. 2: eine Draufsicht auf die Hilfsbrille,
- Fig. 3: einen Teilschnitt durch die Hilfsbrille in einer die beiden optischen Achsen der Linsen enthaltenden Ebene,
- Fig. 4: eine grob schematisierte Darstellung der Vorformung der erfindungsgemäßen Hilfsbrille im aufgesetzten Zustand.

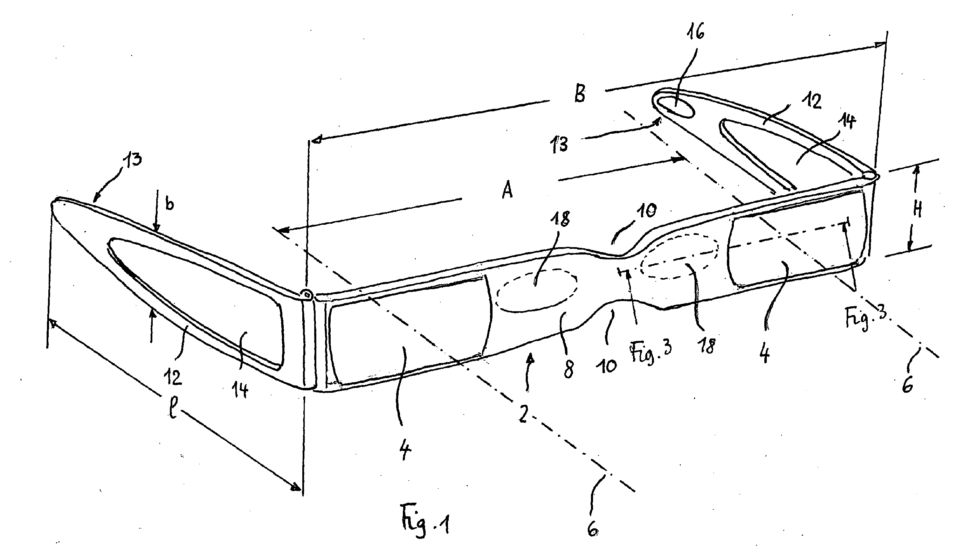

Gemäß Figur 1 umfasst die Hilfsbrille einen Rahmen 2, in den zwei Linsen 4 eingebettet sind. Rahmen 2 und Linsen 4 sind aus einem einstückigen transparenten Polymerwerkstoff, beispielsweise Polycarbonat PC, in einem Spritzgussverfahren hergestellt. Der Rahmen 2 hat die Gestalt einer schmalen rechteckigen dünnen Platte und ist sowohl auf seiner einem Brillenträger zugewandten Rückseite als auch auf der Vorderseite plan oder allenfalls geringfügig gekrümmt. Die optischen Achsen 6 der Linsen 4 befinden sich in einem Abstand A, der etwa 60 mm beträgt und damit etwas kleiner ist als die durchschnittliche Pupillendistanz PD eines erwachsenen Brillenträgers, die etwa 65 mm beträgt. Dies ist möglich, da die Augäpfel bei der Betrachtung von Gegenständen im Nahbereich auf Konvergenz eingestellt werden und somit die optischen Achsen der Augenlinsen die optischen Achsen 6 der Linsen 4 etwa im Bereich des Rahmens kreuzen. Die Linsen 4 sind so weit wie konstruktiv möglich an den Seitenrändern des Rahmens 2 angeordnet, um bei gegebener Rahmenbreite B des Rahmens 2 einen maximalen Abstand A ihrer optischen Achsen 6 zu ermöglichen.

Ein zwischen den beiden Linsen 4 befindlicher Mittelsteg 8 ist im Bereich seiner Mitte auf den beiden Schmalseiten mit einer Einsenkung oder Ausnehmung 10 versehen, die einerseits als Auflagefläche dient, mit der die Hilfsbrille auf der Nase eines Trägers aufliegt. Außerdem dienen die beiden Ausnehmungen 10 auch dazu, den Mittelsteg 8 in diesem Mittenbereich zu schwächen, so dass die zum Durchbiegen des Rahmens 2 erforderliche Kraft verringert und die elastische Verformbarkeit erhöht ist.

Am Rahmen 2 sind an dessen seitlichen Rändern schwenkbar kurze Bügel 12 angeordnet, die leicht nach außen gewölbt sind. Die Bügel 12 laufen an ihren Freienden 13 geradlinig aus und ihre Länge 1 und ihre Breite b, die sich zu den Freienden 13 hin verringert, ist kleiner als die oder höchstens gleich der Breite (Rahmenbreite B) bzw. der Rahmenhöhe H des Rahmens 2 (b ≤ H, 1 ≤ B), so dass sie im eingeklappten Zustand nicht über den Rahmen 2 vorstehen. Die Breite b der Bügel 12 entspricht zumindest im Bereich des Rahmens 2 der Höhe des Rahmens 2 (Rahmenhöhe H), um eine stabile Lagerung am Rahmen 2 sicherzustellen. Die Bügel 12 sind leichtgängig schwenkbar am Rahmen 2 gelagert, so dass sie aus dem eingeklappten Zustand selbsttätig durch das von der Schwerkraft ausgeübte Drehmoment in die Offenstellung ausklappen, wenn der Rahmen 2 in die Waagerechte derart geschwenkt ist, dass sich die Bügel 12 unterhalb des Rahmens 2 befinden.

Eine Symmetrie der Ausnehmungen 10 bezüglich einer durch die beiden optischen Achsen 6 der Linsen 4 festgelegte Ebene sowie eine bezüglich dieser Ebene symmetrische Gestaltung der Bügel 12 ermöglicht ein Aufsetzen der Hilfsbrille in zwei um 180° verdrehten Positionen. Dadurch wird zusätzlich die Einhandbedienung erleichtert.

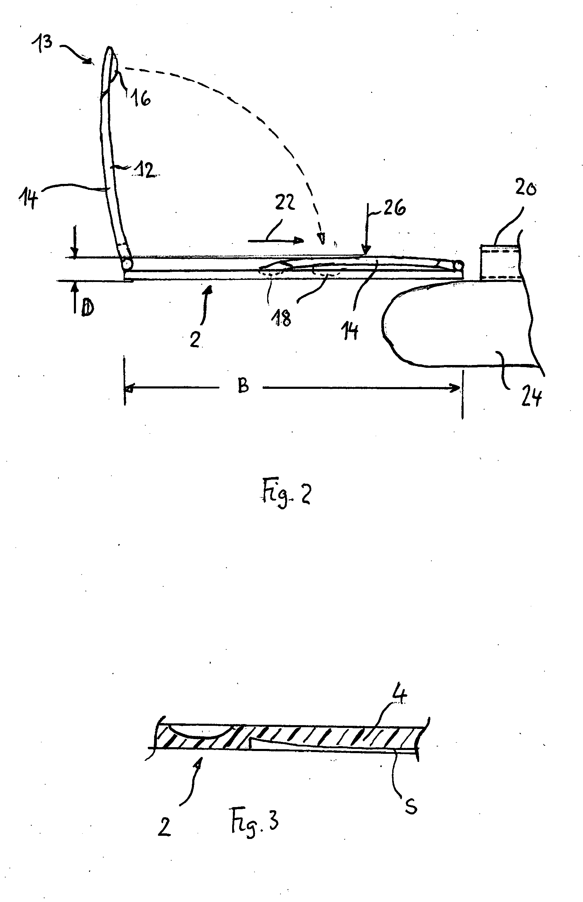

Die Bügel 12 sind in ihrer Schwenkbewegung nach außen begrenzt. Um einerseits bei ausreichender Materialstärke eine hohe elastische Verformbarkeit zu ermöglichen, sind die Bügel 12 außerdem jeweils mit einem großflächigen Durchbruch 14 versehen. Die hohe Verformbarkeit der Bügel bei moderaten Rückstellkräften ermöglicht einen sicheren Halt der Hilfsbrille auf der Nase durch Ausüben einer zusätzlichen Klemmkraft auf die Schläfen des Trägers bei zugleich hohem Tragekomfort. In die durch den Durchbruch 14 in den Bügeln 12 jeweils erzeugte Öffnung schwenken die Freienden 13 der jeweils gegenüberliegenden Bügel 12 ein und verringern auf diese Weise die Aufbauhöhe D (Fig. 2) der Hilfsbrille bei eingeklappten Bügeln 12.

An ihren Freienden 13 sind die Bügel 12 auf der Innenseite jeweils mit einem erhabenen Auflagekissen 16 aus einem rutschhemmenden Material versehen, mit denen zusätzlich ein unbeabsichtigten Verrutschen der Hilfsbrille verhindert wird.

Der Rahmen 2 ist auf seiner dem Träger zugewandten Rückseite mit zwei in der Figur gestrichelt angedeuteten muldenförmigen Vertiefungen 18 versehen, in denen die Auflagekissen 16 der Bügel 12 einliegen, wenn diese eingeklappt sind, so dass die überstehenden Auflagekissen 16 die Aufbauhöhe D des optischen Hilfsmittels im eingeklappten Zustand nicht vergrößern, wie dies in Figur 2 zu erkennen ist. Im eingeklappten oder eingeschwenkten Zustand beider Bügel 12 ragt außerdem jeweils das Freiende 13 des Bügels 12 durch den Durchbruch 14 des anderen Bügels 12 hindurch, so dass die Aufbauhöhe D auch durch den Überlapp der Bügel 12 nicht oder nur geringfügig vergrößert wird.

In der Draufsicht nach Figur 2 ist außerdem zu erkennen, dass die Linsen 4 ohne Überstand in den Rahmen 2 eingebettet sind.

Im eingeklappten Zustand kann die Hilfsbrille in die offene, schmale Stirnseite eines rechteckigen Behälters 20 in Richtung des Pfeils 22 eingeschoben werden, der, wie im Ausführungsbeispiel schematisch veranschaulicht, an einem portablen elektronischen Gerät 24, beispielsweise mit Hilfe eines Klebebandes fixiert oder über eine Klettverbindung lösbar angebracht ist. Bei einem solchen elektronischen Gerät 24 kann es sich beispielsweise um ein Mobiltelefon oder um eine Digitalkamera handeln, die auf Grund der Kleinheit ihrer Bedienelemente sowie Anzeigesymbole in relativ kleinen Displays für presbyopische Menschen ohne Sehhilfe nur schwer zu bedienen sind.

Durch die gewölbte Form der Bügel 12 werden diese außerdem beim Einschieben in den Behälter 20 in Richtung des Pfeils 26 nach innen gebogen, so dass sie sich im Behälter 20 verklemmen und die Hilfsbrille gegen ein Herausrutschen sichern. Die Rahmenbreite B der Hilfsbrille ist kleiner als 100 mm, vorzugsweise etwa in der Größenordung der Länge einer Scheck- oder Kreditkarte (etwa 85 mm). Bei einer Rahmenhöhe H < 20 mm (Figur 1) und einer Aufbauhöhe D < 5 mm, entsteht eine miniaturisierte Bauform, die es ermöglicht, die Hilfsbrille problemlos auch in handelsüblichen Geldbörsen mitzuführen.

Im Teilschnitt gemäß Figur 3 ist zu erkennen, dass als Linse 4 eine Plankonvexlinse, d. h. eine Linse ohne Meniskus vorgesehen ist, deren plane Fläche mit der Planebene der Rückseite des Rahmens 2 fluchtet. Diese plane optische Fläche ist durch die eingeklappten Bügel vor mechanischer Beschädigung beim Ablegen der Hilfsbrille oder beim Einschieben in den Behälter geschützt. Die konvexe Linsenfläche ist gegenüber der planen Vorderseite des Rahmen 2 nach innen versetzt, so dass ihr Scheitelpunkt S nicht über die durch diese plane Fläche festgelegte Ebene hinausragt. Auf diese Weise ist auch die konvex gekrümmte Linsenfläche vor einer Beschädigung geschützt. Um die durch die Planfläche entstehenden Fehler zu verringern, ist die konvexe Fläche asphärisch. Ergänzend zu einer konvexen optisch brechenden Fläche kann auch eine der Linsenflächen mit einer diffraktiven Struktur versehen sein. Des weiteren kann die Linse 4 als Gleitsichtglas gestaltet sein, um den Einsatz der Hilfsbrillen für zwei Arbeitsbereiche, beispielsweise Entfernungsbereich 40 cm (Nahbereich im engeren Sinn) und 40 cm - 100 cm (erweiterter Nahbereich) abzudecken.

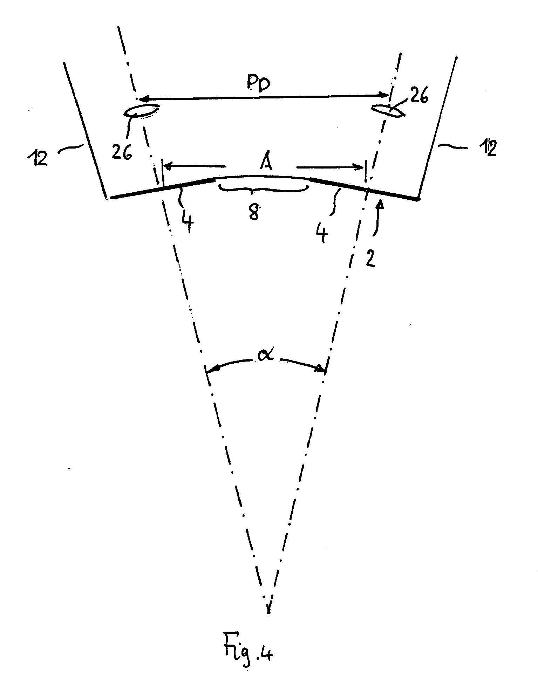

In Figur 4 ist grob schematisch in einer Draufsicht von oben dargestellt, wie sich die Hilfsbrille beim Aufsetzen im Bereich des Mittelsteges 8 verformt. Beim Aufsetzen werden die Bügel 12 an den Schläfen 10 des Trägers zunächst bis zu einem konstruktiv vorgegebenen Anschlag nach außen geschwenkt und zusätzlich je nach Elastizität und Verformbarkeit an den Schläfen des Trägers nach außen aufgebogen. Die von den Schläfen auf die Bügel 12 ausgeübte Kraft wird bei starren Bügeln 12 vollständig oder bei entsprechend elastischen Bügeln 12 teilweise auf den Rahmen 2 übertragen, der sich durch den geschwächten Mittelsteg 8 im Bereich dieser Schwächung in einer zum Brillenträger hin gerichteten konvexen Krümmung verformt. Dies hat zur Folge, dass die optischen Achsen 6 der Linsen 4 einen von 0° verschiedenen Konvergenzwinkel α einnehmen, d.h. nicht parallel zueinander verlaufen. Dieser Konvergenzwinkel α bewirkt zum einen eine Konvergenzunterstützung der Augen, deren Pupillen 26 in der Figur schematisch angedeutet sind. Zum anderen wird durch die Durchbiegung des Rahmens 2 auch bewirkt, dass die optischen Achsen 6 der Linsen trotz eines Abstandes A der kleiner ist als die Pupillendistanz PD der Pupillen 26 auf Grund der Konvergenz dennoch weitgehend an die Pupillendistanz PD angepasst ist.

### Bezugszeichenliste

- 2: Rahmen
- 4: Linse
- 6: optische Achse
- 8: Mittelsteg
- 10: Ausnehmung
- 12: Bügel
- 14: Aussparung
- 16: Auflagekissen
- 18: Vertiefung
- 20: Behälter
- 22, 26: Pfeil
- 24: Gerät
- 26: Pupille

- A: Abstand
- B: Rahmenbreite
- H: Rahmenhöhe
- D: Aufbauhöhe
- 1: Länge
- b: Breite
- PD: Pupillendistanz
- α: Konvergenzwinkel

## Patentansprüche

1. Hilfsbrille für die Bedienung eines portablen elektronischen Gerätes mit einem Rahmen (2), der durch eine schmale, dünne Platte gebildet ist, in der zwei Linsen (4) eingebettet sind, und an deren seitlichen Rand jeweils ein schwenkbarer Bügel (12) angeordnet ist, dessen Freiende (13) im Wesentlichen geradlinig ausläuft, wobei die Bügel (12) bei auf die Nase eines Trägers aufgesetztem Rahmen (2) unter Ausübung einer nach innen gerichteten Klemmkraft an den Schläfen des Trägers anliegen, und bei der der Rahmen (2) einen flexiblen Mittelsteg (8) und eine derart geringe Rahmenbreite (B) aufweist, dass beim Aufsetzen der Hilfsbrille durch die an den Schläfen des Brillenträgers anliegenden Bügel (12) eine elastische Durchbiegung des Rahmens (2) erfolgt, durch die die Klemmkraft zwischen den Bügeln (12) und den Schläfen zumindest unterstützt wird.

2. Hilfsbrille nach Anspruch 1, bei der die Schwenkbewegung der Bügel (12) nach außen begrenzt ist.

3. Hilfsbrille nach Anspruch 2, bei der die Bügel (12) federelastisch sind.

4. Hilfsbrille nach einem der vorhergehenden Ansprüche, bei der die Bügel (12) an ihren Freienden (13) zumindest auf ihrer Innenseite mit einem rutschhemmenden Material versehen sind.

5. Hilfsbrille nach Anspruch 4, bei der als rutschhemmendes Material ein erhabenes Auflagekissen (16) vorgesehen ist.

6. Hilfsbrille nach einem der vorhergehenden Ansprüche, bei der zumindest einer der Bügel (12) einen Durchbruch (14) aufweist, der derart gestaltet ist, dass die Linsen (4) im eingeklappten Zustand von den Bügeln (12) allenfalls in einem kleinen Teilbereich abgedeckt werden.

7. Hilfsbrille nach einem der Ansprüche 1 bis 5, bei der die Bügel (12) jeweils einen Durchbruch (14) aufweisen, durch den im eingeklappten Zustand das Freiende (13) des jeweils anderen Bügels (12) hindurchragt, so dass es auf dem Rahmen (2) aufliegt.

8. Hilfsbrille nach Anspruch 7, bei der der Durchbruch (14) derart gestaltet ist, dass die Linsen (4) im eingeklappten Zustand von den Bügeln (12) allenfalls in einem kleinen Teilbereich abgedeckt werden.

9. Hilfsbrille nach einem der Ansprüche 6 bis 8, bei der im Rahmen (2) Vertiefungen (18) angeordnet sind, in denen bei eingeschwenkten Bügeln (12) das Auflagekissen (16) einliegt.

10. Hilfsbrille nach einem der vorhergehenden Ansprüche, bei der die Bügel (12) nach außen gewölbt sind.

11. Hilfsbrille nach einem der vorhergehenden Ansprüche, bei der die Bügel (12) derart schwenkbar am Rahmen (2) angeordnet sind, dass sie, wenn sie sich bei waagerecht gehaltenem Rahmen (2) unterhalb des Rahmens (2) befinden, durch die Wirkung der Schwerkraft selbsttätig aufklappen.

12. Hilfsbrille nach einem der vorhergehenden Ansprüche, bei der Linsen (4) und Rahmen (2) einstückig aus einem Spritzgussteil geformt sind.

13. Hilfsbrille nach einem der vorhergehenden Ansprüche, deren Linsen (4) eine Fläche mit einer diffraktiven Struktur aufweisen.

14. Hilfsbrille nach einem der Ansprüche 1 bis 9, deren Linsen (4) als Gleitsichtgläser ausgeführt sind.

15. Hilfsbrille nach einem der vorhergehenden Ansprüche, deren Linsen (4) in den durch eine Platte gebildeten Rahmen (2) ohne Überstand eingebettet sind.

16. Hilfsbrille nach einem der vorhergehenden Ansprüche, deren Rahmenbreite (B) kleiner als 90 mm und deren Rahmenhöhe (H) kleiner 20 mm ist und deren Aufbauhöhe (D) mit eingeklappten Bügeln weniger als 5 mm beträgt.

17. Hilfsbrille nach einem der vorhergehenden Ansprüche, die bezüglich einer durch optische Achsen (6) der Linsen (4) festgelegten Ebene symmetrisch gestaltete Ausnehmungen (10) zum Auflegen auf die Nase des Trägers sowie symmetrisch zu dieser Ebene gestaltete Bügel 12 aufweist.
